# EUROPÄISCHE PATENTSCHRIFT

(11) **EP 2 240 336 B1**
(45) Veröffentlichungstag und Bekanntmachung des Hinweises auf die Patenterteilung: **21.11.2012**
(21) Anmeldenummer: 09707793.7
(22) Anmeldetag: 06.02.2009
(51) Int. Cl.: B60H 1/00, B29C 49/72, B60K 11/08, B29L 31/30, F02M 35/10

(54) **VERFAHREN ZUR HERSTELLUNG EINES LUFTKANALS SOWIE EIN ENTSPRECHENDER LUFTKANAL**
METHOD FOR PRODUCING AN AIR CHANNEL AND A CORRESPONDING AIR CHANNEL
PROCÉDÉ DE PRODUCTION D'UN CANAL D'AIR, ET CANAL D'AIR CORRESPONDANT

(30) Priorität: 08.02.2008 DE 102008008344
(43) Veröffentlichungstag der Anmeldung: 20.10.2010
(73) Patentinhaber: Mann + Hummel GmbH, 71638 Ludwigsburg (DE)
(72) Erfinder: JESSBERGER, Thomas, 71679 Asperg (DE); HANSELMANN, Markus, 74348 Lauffen A.n. (DE); DANNEBERG, Horst, 37441 Bad Sachsa (DE); REGENER, Guido, 38321 Klein Denkte (DE); HENTSCHEL, Maik, 07646 Bubeck (DE)
(86) Internationale Anmeldenummer: PCT/EP2009/051347
(87) Internationale Veröffentlichungsnummer: WO 2009/098273

(56) Entgegenhaltungen:
- EP-A- 0 913 242
- DE-A1-102006 032 672
- DE-U- 1 940 705

## Beschreibung

Die Erfindung betrifft ein Verfahren zur Herstellung eines Luftkanals mit den Merkmalen nach dem Oberbegriff des Anspruchs 1 sowie einen derartigen Luftkanal mit den Merkmalen nach dem Oberbegriff des Anspruchs 8.

### Stand der Technik

In Kraftfahrzeugen wird eine Vielzahl von Luftkanälen beispielsweise für die Versorgung des Fahrzeuginnenraums und insbesondere des Antriebsmotors mit Frischluft eingesetzt. Ein erheblicher Teil dieser Luftkanäle ist aus Kunststoff unter Einsatz der allgemein bekannten Blastechnik hergestellt. Hierbei wird ein extrudierter, plastisch verformbarer Kunststoffschlauch in eine Form eingelegt und unter Innendruck aufgeblasen. Der heiße und deshalb thermoplastisch verformbare Kunststoffschlauch schmiegt sich unter Einwirkung seines Innendrucks an die Innenwände der Formmulde an, wodurch er die gewünschte Form erhält. Dabei ist es nicht möglich, mit dem endlos extrudierten Schlauchkörper Luftkanäle als fertige Einzelstücke auszubilden. Vielmehr wird ein Rohling geblasen, der den späteren Luftkanal und endseitig daran angeformte Endstücke umfasst.
In der Schrift EP0913242A1 ist ein Verfahren zur Abtrennung eines Endstückes eines Blasformteiles von einem Luftkanal beschrieben gemäβ dem Oberbegriff des Anspruchs 1. Das Verfahren besteht darin, das geschlossene Endstück eines Luftkanals mit einem in den Werkzeughälften eines Blasformwerkzeuges eingebetteten Messers in einem Schneidvorgang abzutrennen.
In dem Gebrauchsmuster DE 19 40 705 U wird eine Vorrichtung zur Entfernung eines trichter- oder tulpenförmigen Abfallteiles bei der Herstellung von Hohlkörpern im Blasverfahren gezeigt. Es handelt sich um einen geschlossenen Hohlkörper, der im Bereich des Blasdoms die Füll-, Entleerung- oder Anschlussöffnung des Hohlkörpers festlegt, beispielsweise einen Flaschenhals. Das trichter- oder tulpenförmige Abfallteil wird von Blasform und Blasdorn ganzflächig innen und außen eingespannt und durch Pressen verfestigt. Durch axialen Hub oder eine Drehung wird das Endstück längs einer Sollbruchstelle getrennt. Zur Einspannung des Abfallteils befindet der Blasdorn in die Öffnung des Hohlkörpers.

Nach dem Stand der Technik werden diese Endstücke nach Abkühlung und Erstarrung des Rohlings von dem Luftkanal durch eine mechanische Nachbearbeitung abgetrennt. Die Abtrennung erfolgt in vorbekannter Weise beispielsweise mittels einer Bandsäge, einer Kreissäge, durch Guillotinenschnitt oder durch Abstechen mittels Meißel oder Hartmetallplatten.

Bei all diesen Nachbearbeitungsverfahren entstehen Späne unterschiedlicher Ausprägung. Während bei der Band- oder Kreissäge sehr viele kleine Späne entstehen, fallen beim Guillotinenschnitt so genannte Verdrängungsspäne und Materialabrieb an. Beim Abstechen ist eine Mischung aus kleinen und extrem langen Spänen zu beobachten.

Es hat sich gezeigt, dass die Späne nicht prozesssicher abgeführt werden können. Es kann nicht ausgeschlossen werden, dass ein Teil der Späne im Bauteil verbleibt. Dies kann zu Schwierigkeiten bei der Betriebssicherheit von denjenigen Komponenten führen, die mittels des derart hergestellten Luftkanals mit Frischluft versorgt werden. Insbesondere bei Komponenten im Reinluftbereich des Motors sind Schwierigkeiten zu beobachten, da hier die Späne durch den hindurchtretenden Luftstrom direkt ohne Filterung dem Motor zugeführt werden und dort Schäden anrichten können.

So kann es z. B. zu Ablagerungen oder Beschädigungen am Turbolader kommen, was in der Folge zum Ausfall des Turboladers führt. Auch kann nicht ausgeschlossen werden, dass Späne in den Innenraum des Motors gelangen. Bei der Verwendung von glasfaserhaltigen Kunststoffen kann beispielsweise eine Ablagerung der Glasfasern aus den Spänen zwischen dem Kolbenring und der Zylinderlaufbuchse auftreten, was zu erhöhter Leckage, Kompressions- und Leistungsverlust führt.

Der Erfindung liegt die Aufgabe zugrunde, ein Verfahren zur Herstellung eines Luftkanals aus geblasenem Kunststoff anzugeben, bei dem die Abtrennung von Endstücken des Rohlings mit hoher Maßgenauigkeit unter Vermeidung von Spanbildung möglich ist.

Diese Aufgabe wird durch ein Verfahren mit den Merkmalen des Anspruchs 1 gelöst.

Der Erfindung liegt des weiteren die Aufgabe zugrunde, einen gattungsgemäßen Luftkanal derart weiterzubilden, dass bei einfacher Herstellbarkeit die Betriebssicherheit der von ihm mit Luft versorgten Komponenten verbessert ist.

Diese Aufgabe wird durch einen Luftkanal mit den Merkmalen des Anspruchs 8 gelöst.

### Offenbarung der Erfindung

Es wird ein Verfahren zur Herstellung eines Luftkanals aus geblasenem Kunststoff vorgeschlagen, bei dem auf einer Umfangsfläche des Rohlings an mindestens einem Ende des späteren Luftkanals eine umlaufende Kerbe zur Bildung einer umlaufenden Sollbruchtrennfläche eingeformt wird. Zur Abtrennung des Endstückes wird dieses an der Sollbruchtrennfläche vom Luftkanal abgebrochen. Es entsteht ein Luftkanal, der an diesem Ende eine umlaufende Bruchfläche aufweist. Durch eine geeignete Prozessführung kann der Verlauf der Sollbruchtrennfläche und der daraus entstehenden Bruchfläche zuverlässig gesteuert werden, wodurch der fertiggestellte Luftkanal an seinem Ende eine hohe Maßgenauigkeit aufweist. Insbesondere ist die Entstehung von Spänen beim Trennvorgang zuverlässig vermieden. Der Trennvorgang ist einfach und kostengünstig bei hohen Taktraten auszuführen. Durch das Ausbleiben einer Spanentwicklung ist die Betriebssicherheit der von einem solchen Luftkanal mit Luft versorgten Komponenten verbessert.

In bevorzugter Weiterbildung wird das Verfahren derart gesteuert, dass die Sollbruchtrennfläche und die sich daraus entwickelnde Bruchfläche von einer Fußlinie der Kerbe radial nach innen zu einer Innenfläche des Rohling bzw. des Luftkanals und dabei axial nach innen in den Luftkanal hinein verläuft. Hierdurch wird erreicht, dass stirnseitig an das Ende des Luftkanals angrenzende Komponenten nicht in direkten Kontakt mit der mehr oder weniger unregelmäßig geformten Bruchfläche kommen. Vielmehr ist der Luftkanal mit einer beim Blasen ausgeformten Stirnfläche versehen, wobei die Bruchfläche von der Stirnfläche aus zur Innenfläche des Luftkanals verläuft. Die beim Blasen geformte Stirnfläche weist eine hohe Maßgenauigkeit auf, so dass ein strömungsdichter Anschluss von weiteren Komponenten ohne weiteres möglich ist. Außerdem ist die Innenfläche des Luftkanals durch die Bruchfläche nicht nennenswert beeinträchtigt, so dass die gewünschten strömungsleitenden Eigenschaften erhalten bleiben.

In bevorzugter Weiterbildung wird auf der Innenfläche des Rohlings innen gegenüberliegend zur Kerbe beim Blasen ein umlaufender Wulst ausgebildet, wobei die Sollbruchtrennfläche von der Fußlinie der Kerbe radial nach innen und dabei axial nach innen zu einer Seitenkante des Wulstes verläuft. Der beim Blasen sich an der Kerbe ausbildende Wulst kann durch geeignete Formgebung der Kerbe und durch eine geeignete Prozessführung in seiner geometrischen Ausgestaltung derart gesteuert werden, dass die Sollbruchtrennfläche den vorgenannten gewünschten Verlauf nimmt. Hierdurch wird das Endstück einschließlich des vollständigen Wulstes abgebrochen, ohne dass ein Teil des Wulstes auf der Innenseite des Luftkanals verbleibt. Der Strömungsquerschnitt des auf diese Weise gebildeten Luftkanals ist durch den Wulst nicht beeinträchtigt.

Die Kerbe kann verschiedene geeignete Querschnittsformen aufweisen. Erfindungsgemäß wird die Kerbe im Querschnitt keilförmig ausgebildet, und der Querschnitt der Kerbe mit einer an das Ende des Luftkanals angrenzenden Radialfläche in einer in Axialrichtung gegenüberliegenden Schrägfläche ausgebildet. Die Keilform bewirkt die Ausbildung einer exakt definierten Fußlinie, von der aus die Sollbruchtrennfläche mit hoher Maßgenauigkeit verläuft. Außerdem erlaubt die Keilform die flächige Aufbringung von Trennkräften, was die Ausbildung eines reinen Trennbruches ohne Spanbildung begünstigt. Die unsymmetrische Gestaltung des Kerbenquerschnitts mit der an das Ende des Luftkanals angrenzenden Radialfläche begünstigt die Ausbildung der Sollbruchtrennfläche in ihrem Verlauf nach innen in den Luftkanal hinein. Außerdem entsteht durch diese Radialfläche die spätere Stirnfläche des Luftkanals mit entsprechend hoher Maßgenauigkeit.

Das Abbrechen des Endstückes kann auf verschiedene Weise erfolgen. Beispielsweise können zur Erzeugung des Bruchs Biegemomente, Torsionsmomente, Querkräfte sowie eine beliebige Kombination davon aufgebracht werden. Bevorzugt werden mindestens ein und insbesondere mehrere über den Umfang des Rohlings verteilte Trennwerkzeuge zum Abbrechen des Endstückes radial von außen nach innen in die Kerbe verfahren. In Verbindung mit einer geeigneten geometrischen Ausgestaltung der Kerbe lässt sich ein präzise reproduzierbarer Verlauf der Sollbruchtrennfläche einstellen. Insbesondere in Verbindung mit der vorstehend beschriebenen unsymmetrisc hen Ausgestaltung des keilförmigen Kerbenquerschnitts wird sichergestellt, dass nur das Endstück radial nach innen verformt und dabei axial vom Luftkanal weggedrückt wird, während der daran noch angeschlossene Luftkanal im Wesentlichen unverformt bleibt. Dies trägt zur Maßgenauigkeit des nach der Abtrennung der Endstücke fertiggestellten Luftkanals bei.

In einer bevorzugten Ausführungsform wird ein Trennwerkzeug mit einer dem Querschnitt der Kerbe entsprechenden Kontur eingesetzt. Dies führt dazu, dass das Trennwerkzeug beim Trennvorgang flächig an den Flächen der Kerbe anliegt. Es entstehen örtlich geringe Flächenpressungen, wodurch Deformationen im Material und Spanbildung vermieden sind.

### Kurze Beschreibung der Zeichnungen

Ein Ausführungsbeispiel der Erfindung ist nachfolgend anhand der Zeichnung näher beschrieben. Es zeigen:

Figur 1 in schematischer Querschnittsdarstellung einen Ausschnitt eines geblasenen Kunststoff-Rohlings zur Herstellung eines Luftkanals mit einer außenseitig umlaufenden Kerbe und einem innenseitig umlaufenden Wulst zur Bildung einer Sollbruchtrennfläche;

Figur 2 die Anordnung nach Figur 1 bei angesetzten Trennwerkzeugen;

Figur 3 den nach Figur 2 von seinem Endstück abgetrennten Luftkanal mit einer umlaufenden Bruchfläche.

### Ausführungsform(en) der Erfindung

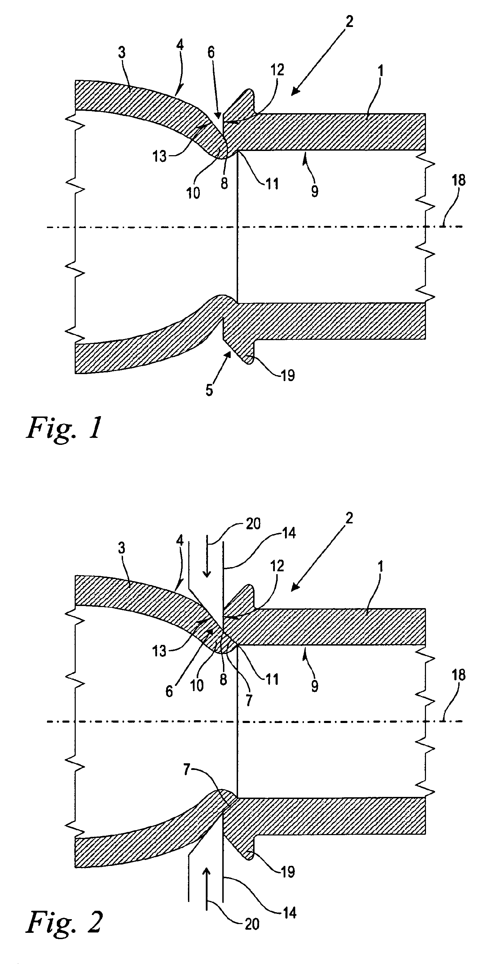

Fig. 1 zeigt in schematischer Querschnittsdarstellung einen Ausschnitt eines aus Kunststoff geblasenen Rohlings 2 zur Herstellung eines Luftkanals 1, insbesondere für ein Kraftfahrzeug. Der Luftkanal 1 kann für die Versorgung des Kraftfahrzeuginnenraumes mit Frischluft, beispielsweise im Bereich einer Klimaanlage, eines Lüfters oder dgl. vorgesehen sein. Im gezeigten Ausführungsbeispiel ist der Luftkanal 1 für die Versorgung eines Verbrennungsmotors des Kraftfahrzeugs vorgesehen. Auf der vergleichsweisen kühlen Rohluftseite eines nicht dargestellten Luftfilters wird hierfür bevorzugt Polypropylen eingesetzt. Auf der thermisch höher belasteten Reinluftseite des Luftfilters, insbesondere im Bereich eines Turboladers oder auch an anderen motornahen Stellen, kommt bevorzugt glasfaserverstärktes Polyamid zum Einsatz. Es können aber auch andere thermoplastische Kunststoffe für die Herstellung des Rohlings 2 bzw. des Luftkanals 1 vorgesehen sein.

Der hier gezeigte Ausschnitt des Rohlings 2 umfasst ein Ende 5 des Luftkanals 1, an das ein später abzutrennendes Endstück 3 einteilig angeformt ist. Der später nach dem Abtrennen des Endstückes 3 entstehende Luftkanal 1 umfasst einen etwa zylindrischen Hohlkörper, an dessen Ende 5 ein umlaufender Flansch 19 angeformt ist. Es können aber auch abweichende geometrische Ausgestaltungen des Luftkanal-Hohlkörpers und des Endes 5 vorgesehen sein. Der Rohling 2 erstreckt sich entlang einer geraden Mittellinie 18. Es kann aber auch ein beliebiger anderer, insbesondere gekrümmter oder abgewinkelter Verlauf der Mittellinie 18 zweckmäßig sein.

Der Rohling 2 weist auf seiner äußeren Umfangsfläche 4 am Endstück 3 direkt angrenzend an das Ende 5 des später nach Abtrennung des Endstückes 3 gebildeten Luftkanals 1 eine außenseitig umlaufende Kerbe 6 auf, die zur Bildung einer umlaufenden, in Fig. 2 dargestellten Sollbruchtrennfläche 7 vorgesehen ist. Die Kerbe 6 ist im Querschnitt keil- bzw. V-förmig ausgebildet. Im gezeigten Ausführungsbeispiel ist der Querschnitt der Kerbe 6 unsymmetrisch und mit einer an das Ende 5 des Luftkanals 1 angrenzenden Radialfläche 12 und einer in Axialrichtung gegenüberliegenden Schrägfläche 13 ausgebildet. Die Radialfläche 12 verläuft ausschließlich in der durch die Radialrichtung zur Mittellinie 18 gebildeten Ebene, während die Schrägfläche 13 neben einer radialen Erstreckung auch eine axiale Erstreckung aufweist und hierbei einen Kegelstumpf bildet. Die Radialfläche 12 und die Schrägfläche 13 treffen sich radial innen spitzwinklig unter Bildung einer umlaufenden Fußlinie 8.

Der gezeigte Rohling 2 wird in einem Blasvorgang hergestellt, wobei ein extrudierter und dabei erhitzter, plastisch verformbarer Kunststoffschlauch aus thermoplastischem Kunststoff als Endlosmaterial in eine nicht dargestellte Form eingelegt und dabei unter Innendruck gesetzt wird. In Folge des Innendrucks schmiegt sich der verformbare Kunststoffschlauch an die Innenwände der nicht dargestellten Formmulde an, wodurch die Außenkontur des Rohlings 2 einschließlich der Kerbe 6, des Flansches 19 und anderer nicht dargestellter Formelemente ausgebildet wird. Hierbei bildet sich außerdem auf einer Innenfläche 9 des Rohlings 2 radial innenseitig der Kerbe 6 bzw. radial innen gegenüberliegend zur Kerbe 6 ein umlaufender Wulst 10 aus. Der Wulst 10 weist in Axialrichtung zum Endstück 3 hin keine präzise definierte Begrenzung auf, da sich der Querschnitt des Endstückes 3 ausgehend von der Kerbe 6 mit fortschreitender Axialerstreckung erweitert. In der axialen Gegenrichtung ist der Wulst 10 durch eine umlaufende Seitenkante 11 begrenzt. Diese Seitenkante 11 liegt bezogen auf die Radialfläche 12 axial einwärts im Luftkanal 1. Die Seitenkante 11 ist beispielhaft scharfkantig dargestellt. Es kann aber auch eine gerundete Ausbildung zweckmäßig sein. Der Wulst 10 erstreckt sich außerdem ausgehend von der Innenfläche 9 im Bereich des Luftkanals 1 radial nach innen.

Der nach Fig. 1 hergestellte Rohling 2 wird nach einer hinreichenden Erstarrung des thermoplastischen Kunststoffes einem Trennvorgang unterzogen, wie er beispielhaft in Fig. 2 dargestellt ist. Die Trennung kann noch in der Blasform des Rohlings 2 vorgenommen werden. Für eine Verkürzung der Fertigungstaktzeiten erfolgt der nachfolgend beschriebene Trennvorgang außerhalb der Blasform.

Zum Abtrennen des Endstückes 3 ist mindestens ein Trennwerkzeug 14 vorgesehen. Bevorzugt werden zwei oder mehr Trennwerkzeuge 14 über den Umfang des Rohlings 2 verteilt und radial von außen nach innen entsprechend Pfeilen 20 in die Kerbe 6 verfahren. Es kann zweckmäßig sein, dass die einzelnen Trennwerkzeuge 14 in Umfangsrichtung einen deutlichen Abstand zueinander aufweisen, wobei die Trennwerkzeuge 14 nur über jeweils einen schmalen Umfangswinkelbereich auf die Kerbe 6 einwirken. Ebenso kann es zweckmäßig sein, die einzelnen Trennwerkzeuge 14 in Umfangsrichtung zumindest näherungsweise lückenfrei zueinander anzuordnen, wobei sie dann näherungsweise auf den gesamten Umfang der Kerbe 6 einwirken.

Die Trennwerkzeuge 14 weisen an ihrem dem Rohling 2 zugewandten Ende eine Querschnittskontur auf, die zumindest näherungsweise exakt der Querschnittskontur der Kerbe 6 entspricht. Demnach liegen die dem Rohling 2 zugewandten Flächen der Trennwerkzeuge 14 flächig an der Radialfläche 12 und der Schrägfläche 13 des Rohlings 2 an. Durch weiteres radiales Verfahren der Trennwerkzeuge 14 radial nach innen in Richtung der Pfeile 20 entsteht an der dem Luftkanal 1 zugeordneten Radialfläche 12 eine rein axial wirkende Flächenpressung, während an der dem Endstück 3 zugeordneten Schrägfläche 13 eine Flächenpressung mit einer radial nach innen gerichteten Richtungskomponente und einer axial vom Luftkanal 1 fortweisenden Richtungskomponente wirkt. In Verbindung mit der geometrischen Ausgestaltung des umlaufenden Wulstes 10 bildet sich eine umlaufende Sollbruchtrennfläche 7 aus, die etwa konisch von der umlaufenden Fußlinie 8 der Kerbe 6 radial nach innen zur Innenfläche 9 des Rohlings 2 und dabei axial nach innen in den Luftkanal 1 hinein zur Seitenkante 11 des Wulstes 10 verläuft.

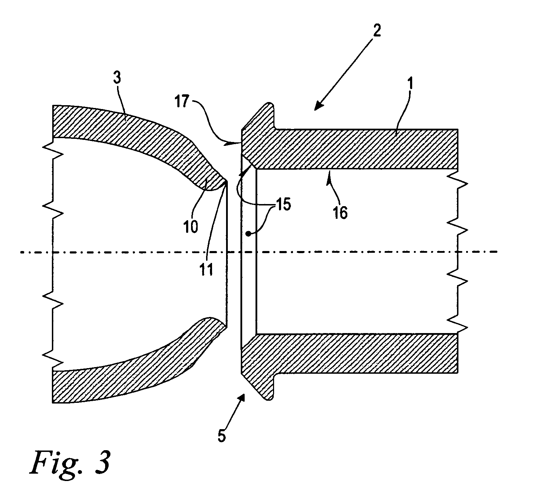

Bei einer hinreichend großen Kraft der Trennwerkzeuge 14 radial nach innen in Richtung der Pfeile 20 bricht das Endstück 3 entlang der Sollbruchtrennfläche 7 (Fig. 2) vom Luftkanal 1 ab, wie dies in Fig. 3 dargestellt ist. Aus der Zusammenschau der Fig. 2 und 3 ergibt sich, dass das Endstück 3 an der Kerbe 6 in Folge der Flächenpressung an der umlaufenden Schrägfläche 13 radial nach innen zusammengedrückt und außerdem axial vom Luftkanal 1 fortgedrückt wird. Entlang der Sollbruchtrennfläche 7 entsteht am Ende 5 des Luftkanals 1 eine umlaufende Bruchfläche 15. Außerdem bildet die beim Blasvorgang ausgeformte Radialfläche 12 am Ende 5 eine Stirnfläche 17 des Luftkanals 1. Der Luftkanal 1 weist eine Innenfläche 16 auf, die der Innenfläche 9 des Rohlings 2 (Fig. 1) in diesem Bereich entspricht. Die Bruchfläche 15 verbindet die in der radialen Ebene liegende Stirnfläche 17 mit der Innenfläche 16 des Luftkanals, wobei sie ausgehend von der Stirnfläche 17 radial nach innen zur Innenfläche 16 und dabei axial nach innen in den Luftkanal 1 etwa konisch hinein verläuft.

Der Darstellung nach Fig. 3 ist noch zu entnehmen, dass das Endstück 3 zusammen mit dem Wulst 10 bis hin zu dessen Seitenkante 11 vom Luftkanal 1 abgebrochen ist. Auf der Innenfläche 16 des Luftkanals 1 befinden sich keine wesentlichen Teile des Wulstes 10 mehr, so dass der Strömungsquerschnitt des Luftkanals 1 nicht durch den Wulst 10 beeinträchtigt ist. Die vorstehenden, auf das gezeigte Ende 5 des Luftkanals 1 bezogenen Ausführungen können sinngemäß als Option auch auf das gegenüberliegende, nicht dargestellte Ende des Luftkanals 1 angewandt werden.

## Patentansprüche

1. Verfahren zur Herstellung eines Luftkanals (1) aus geblasenem Kunststoff, bei dem ein Rohling (2) umfassend den späteren Luftkanal (1) und endseitig daran angeformte Endstücke (3) aus Kunststoff geblasen wird, und bei dem anschließend die Endstücke (3) vom Luftkanal (1) abgetrennt werden, **dadurch gekennzeichnet, dass** auf einer Umfangsfläche (4) des Rohlings (2) an mindestens einem Ende (5) des späteren Luftkanals (1) eine umlaufende Kerbe (6) zur Bildung einer umlaufenden Sollbruchtrennfläche (7) eingeformt wird, und dass das zugeordnete Endstück (3) an der Sollbruchtrennfläche (7) vom Luftkanal (1) abgebrochen wird, wobei die Kerbe (6) im Querschnitt keilförmig ausgebildet wird, wobei der Querschnitt der Kerbe (6) mit einer an das Ende (5) des Luftkanals (1) angrenzenden Radialfläche (12) und einer in Axialrichtung gegenüberliegenden Schrägfläche (13) ausgebildet wird.

2. Verfahren nach Anspruch 1, **dadurch gekennzeichnet, dass** die Sollbruchtrennfläche (7) von einer Fußlinie (8) der Kerbe (6) radial nach innen zu einer Innenfläche (9) des Rohlings (2) und dabei axial nach innen in den Luftkanal (1) hinein verläuft.

3. Verfahren nach Anspruch 2, **dadurch gekennzeichnet, dass** auf der Innenfläche (9) des Rohlings (2) innen gegenüberliegend zur Kerbe (6) ein umlaufender Wulst (10) ausgebildet wird, wobei die Sollbruchtrennfläche (7) von der Fußlinie (8) der Kerbe (6) radial nach innen und dabei axial nach innen zu einer Seitenkante (11) des Wulstes (10) verläuft.

4. Verfahren nach einem der Ansprüche 1 bis 3, **dadurch gekennzeichnet, dass** mindestens ein und insbesondere mehrere über den Umfang des Rohlings (2) verteilte Trennwerkzeuge (14) zum Abbrechen des Endstückes (3) radial von außen nach innen in die Kerbe (6) verfahren werden.

5. Verfahren nach Anspruch 4, **dadurch gekennzeichnet, dass** ein Trennwerkzeug (14) mit einer dem Querschnitt der Kerbe (6) entsprechenden Kontur eingesetzt wird.

6. Luftkanal (3) insbesondere für ein Kraftfahrzeug, wobei der Luftkanal (3) aus geblasenem Kunststoff nach einem Verfahren nach einem der Ansprüche 1 bis 5 hergestellt ist, **dadurch gekennzeichnet, dass** der Luftkanal (3) an mindestens einem axialen Ende (5) eine umlaufende Bruchfläche (15) aufweist.

7. Luftkanal nach Anspruch 6, **dadurch gekennzeichnet, dass** die Bruchfläche (15) radial von außen nach innen zu einer Innenfläche (16) des Luftkanals (1) und dabei axial nach innen in den Luftkanal (1) hinein verläuft.

8. Luftkanal nach Anspruch 7, **dadurch gekennzeichnet, dass** der Luftkanal (1) eine beim Blasen ausgeformte Stirnfläche (17) aufweist, wobei die Bruchfläche (15) von der Stirnfläche (17) aus zur Innenfläche (16) des Luftkanals (1) verläuft.

## Claims

1. Method for manufacturing an air duct (1) made of blown synthetic material, according to which a blank (2) comprising the subsequent air duct (1) and endpieces (3) integrally molded thereto on either end is blown from synthetic material and according to which the endpieces (3) are then separated from the air duct (1), **characterized in that** a circumferential groove (6) for generating a circumferential predetermined fracture surface (7) is molded on a peripheral surface (4) of the blank (2) on at least one end (5) of the subsequent air duct (1) and that the assigned endpiece (3) is broken off the air duct (1) at the predetermined fracture surface (7), the cross-section of the groove (6) having a wedge-shaped design, the cross-section of the groove (6) being realized by means of a radial plane (12) adjacent to the end (5) of the air duct (1) and an inclined plane (13) oppositely positioned in axial direction.

2. Method according to claim 1, **characterized in that** the predetermined fracture surface (7) extends from a bottom line (8) of the groove (6) radially inwards to an inner face (9) of the blank (2) and thereby axially inwards into the air duct (1)

3. Method according to claim 2, **characterized in that** a circumferential bead (10) is formed on the inner face (9) of the blank (2), inside oppositely positioned to the groove (6), the predetermined fracture surface (7) extending from the bottom line (8) of the groove (6) radially inwards and thereby axially inwards to a lateral edge (11) of the bead (10).

4. Method according to one of the claims 1 to 3, **characterized in that** at least one, and in particular several separating tools (14) spread over the circumference of the blank (2) are shifted radially from the outside to the inside into the groove (6) to break off the endpiece (3).

5. Method according to claim 4, **characterized in that** a separating tool (14) corresponding to the cross-section of the groove (6) is used.

6. Air duct (3), in particular for a motor vehicle, the air duct (3) being made of blown synthetic material corresponding to a method according to one of the claims 1 to 5, **characterized in that** the air duct (3) features a circumferential fracture surface (15) at at least one axial end (5).

7. Air duct according to claim 6, **characterized in that** the fracture surface (15) extends radially from the outside to the inside to an inner face (16) of the air duct (1) and thereby axially inwards into the air duct (1).

8. Air duct according to claim 7, **characterized in that** the air duct (1) features an end face (17) shaped during the blowing process, the fracture surface (15) extending from the end face (17) to the inner face (16) of the air duct (1).

## Revendications

1. Procédé de fabrication d'un canal d'air (1) en matière plastique soufflée, selon lequel une ébauche (2) comprenant le canal d'air ultérieur (1) et des pièces d'extrémité (3) moulées aux extrémités de ce canal est soufflée en matière plastique et selon lequel les pièces d'extrémité (3) sont ensuite séparées du canal d'air (1), **caractérisé en ce qu**'une rainure circulaire (6) servant à générer une surface de séparation destinée à la rupture (7) est moulée, sur une surface périphérique (4) de l'ébauche (2), à au moins une extrémité (5) du canal d'air ultérieur (1), et en ce que l'extrémité assignée (3) est rompue au niveau de la surface de séparation destinée à la rupture (7) du canal d'air (1), la section de la rainure (6) ayant la forme d'un cône, la section de la rainure (6) étant exécutée avec une surface radiale (12) limitrophe à l'extrémité (5) du canal d'air (1) et avec une surface oblique (13) opposée en sens axial.

2. Procédé de fabrication selon la revendication 1, **caractérisé en ce que** la surface de séparation destinée à la rupture (7) s'étend, depuis une ligne inférieure (8) de la rainure (6) en sens radial vers l'intérieur jusqu'à une surface intérieure (9) de l'ébauche (2), évoluant ainsi en sens axial vers l'intérieur pour entrer dans le canal d'air (1).

3. Procédé selon la revendication 2, **caractérisé en ce qu**'un bourrelet circulaire (10) est formé sur la surface intérieure (9) de l'ébauche (2), à l'intérieur, en face de la rainure (6), la surface de séparation destinée à la rupture (7) s'étendant, depuis la ligne inférieure (8) de la rainure (6), en sens radial vers l'intérieur et évoluant ainsi en sens axial vers l'intérieur vers une arête latérale (11) du bourrelet (10).

4. Procédé selon l'une des revendications 1 à 3, **caractérisé en ce qu**'au moins un, et en particulier plusieurs outils de séparation (14) répartis sur le pourtour de l'ébauche (2) sont déplacés en sens radial, de l'extérieur vers l'intérieur dans la rainure (6), afin de rompre la pièce d'extrémité (3).

5. Procédé selon la revendication 4, **caractérisé en ce qu**'un outil de séparation (14) doté d'un contour correspondant à la section de la rainure (6) est utilisé.

6. Canal d'air (3), notamment pour un véhicule automobile, le canal d'air (3) étant fabriqué dans une matière plastique soufflée conformément à un procédé selon l'une des revendications 1 à 5, **caractérisé en ce que** le canal d'air (3) présente une surface de rupture (15) circulaire à au moins une extrémité axiale (5).

7. Canal d'air selon la revendication 6, **caractérisé en ce que** la surface de rupture (15) s'étend en sens radial de l'extérieur vers l'intérieur vers une surface intérieure (16) du canal d'air (1), évoluant ainsi en sens axial vers l'intérieur pour entrer dans le canal d'air (1).

8. Canal d'air selon la revendication 7, **caractérisé en ce que** le canal d'air (1) présente une face frontale (17) formée lors du soufflage, la surface de rupture (15) s'étendant depuis la face frontale (17) vers la surface intérieure (16) du canal d'air (1).
